# EUROPEAN PATENT APPLICATION

(11) **EP 4 652 839 A1**
(43) Date of publication of application: **26.11.2025**
(21) Application number: 24785346.8
(22) Date of filing: 05.04.2024
(51) Int. Cl.: A01N 31/00, A01N 59/00, A01N 25/34

(54) **COMPOSITION AND METHOD FOR PREPARING SAME**

(30) Priority: 07.04.2023 KR 20230046179
(71) Applicant: Samsung Electronics Co., Ltd., Suwon-si, Gyeonggi-do 16677 (KR)
(72) Inventor: HONG, Sungpil, Suwon-si Gyeonggi-do 16677 (KR); PARK, Heejin, Suwon-si Gyeonggi-do 16677 (KR); KIM, Jeeyeon, Suwon-si Gyeonggi-do 16677 (KR); KIM, Sungwon, Suwon-si Gyeonggi-do 16677 (KR); KIM, Joonho, Suwon-si Gyeonggi-do 16677 (KR); JUNG, Yeonkyoung, Suwon-si Gyeonggi-do 16677 (KR); JEONG, Yongwon, Suwon-si Gyeonggi-do 16677 (KR)
(74) Representative: Gulde & Partner
(86) International application number: PCT/KR2024/004569
(87) International publication number: WO 2024/210649

(57) **Abstract**

A composition and a method for preparing same are disclosed. In particular, the composition according to the present disclosure may comprise: an organic dye that reacts with visible light to generate singlet oxygen; and an ionic liquid including an ion exhibiting hydrophobicity. Here, the ion exhibiting hydrophobicity may have a charge opposite to the charge of the organic dye in an ionized state. Various other embodiments are also possible.

## Description

### [Technical Field]

Certain example embodiments relate to composition(s) and/or a manufacturing method thereof, and for example, to composition(s) that can perform sterilization and/or virucidal functions, and/or a manufacturing method thereof.

### [Background Art]

Recently, the World Health Organization (WHO) added the Disease X to its list of infectious diseases, and this means that the need for preparing for pandemics according to unknown germs and viruses is becoming much bigger. Also, this indicates that the need for a technology for inactivating unknown germs and viruses, such as an anti-virus smart mask, etc., is becoming much bigger.

Accordingly, a technology for applying an organic dye that can perform sterilization/virucidal functions to products such as a mask, a filter, etc. is being developed, but regarding the conventional technology, a problem which is that, as there is a disadvantage that an organic dye is easily eluted by moisture, etc., it is actually difficult to utilize the organic dye to products, is being pointed out.

Also, a problem which is that, according to the conventional technology, even if an organic dye that can perform sterilization/virucidal functions is applied to a product, it is difficult to visually identify from a user's stance that sterilization/virucidal functions are being performed and the remaining lifespan regarding the sterilization/virucidal functions, is being pointed out.

### [Disclosure]

### [Technical Solution]

Certain example embodiments may overcome one or more of the problems of the conventional technology above. There may be provided a composition that may perform sterilization and/or virucidal functions, and is not easily eluted.

According to an example embodiment, a composition may include at least one organic dye that reacts with a visible light and generates at least singlet oxygen, and at least one ionic liquid including an ion expressing a hydrophobic property, wherein the ion may have an opposite electric charge to an electric charge included by the organic dye in an ionized state.

In certain example embodiments, the composition may consist or consist essentially of the recited elements. The composition may be used in a wearable mask, or in any other suitable fashion.

The ion may include a central atom having the opposite electric charge and at least one alkyl group, and the central atom may be one of nitrogen, phosphate, boron, oxygen, or sulfur, and the at least one alkyl group may include at least three carbon atoms.

Meanwhile, in certain example embodiments the ion does not include a functional group expressing a hydrophilic property.

The organic dye may include at least one of methylene blue, rose Bengal, or phthalocyanine.

The ion may be a cation, and may include at least one of phosphonium, ammonium, imidazolium, or pyrrolidinium.

The ion may be an anion, and may include at least one of tetrafluoroborate, bis(trifluoromethanesulfonyl)imide, or hexafluorophosphate.

The molar number of the organic dye may be from 1 to 10 times or lower of the molar number of the ionic liquid.

The molar number of the organic dye may be from 2 to 5 times or lower of the molar number of the ionic liquid.

The composition may further include a polymeric material, and the composition may be formed in a form of fiber wherein the organic dye, the ionic liquid, and the polymeric material are combined.

The composition may be formed in a form of nano fiber as the organic dye, the ionic liquid, and the polymeric material are combined, and then electrospinning may be performed.

The polymeric material may include at least one of cellulose acetate or polyacrylonitrile.

The mass of the organic dye may be from 0.1 wt% to 20 wt% of the mass of the polymeric material.

The mass of the organic dye may be from 1.0 wt% to 3.0 wt% of the mass of the polymeric material.

The composition may exist as a solution at room temperature, and may further include at least one auxiliary solvent from among water and ethanol.

The organic dye may be discolored as the singlet oxygen reacts with germs or viruses.

### [Description of Drawings]

Example embodiments herein are illustrated in the accompanying drawings, throughout which like reference letters indicate corresponding parts in the various figures. The example embodiments herein will be better understood from the following description with reference to the drawings, in which:
FIG. 1 is a diagram schematically illustrating a configuration of a composition according to an example embodiment;
FIG. 2 is a diagram illustrating in detail a configuration of a composition according to an example embodiment;
FIG. 3 is a diagram for illustrating a method of manufacturing a composition according to an example embodiment as a solution;
FIG. 4 is a diagram for illustrating a method of manufacturing a composition according to an example embodiment as nano fiber;
FIG. 5 is a diagram illustrating an experimental example for explaining an effect of inactivating a virus by a composition according to an example embodiment;
FIG. 6 is a diagram illustrating an experimental example for confirming generation of singlet oxygen by a composition according to an example embodiment;
FIG. 7 and FIG. 8 are diagrams illustrating experimental examples for explaining an effect that a composition according to an example embodiment is not eluted in water;
FIG. 9 is a diagram illustrating an experimental example for explaining a color change in case a composition according to an example embodiment performs virus inactivation; and
FIG. 10 is a diagram illustrating an experimental example for confirming that no change in performance occurs in a visible light condition in case an organic dye is excluded in a composition according to an example embodiment.

### [Mode for Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include various modifications, equivalents, and/or alternatives of the embodiments of the disclosure. Also, with respect to the detailed description of the drawings, similar components may be designated by similar reference numerals.

Also, in describing the disclosure, in case it is determined that detailed explanation of related known functions or components may unnecessarily confuse the gist of the disclosure, the detailed explanation in that regard will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, the terms used in the disclosure are used just to explain specific embodiments, and are not intended to limit the scope of the disclosure. In addition, singular expressions include plural expressions, unless defined obviously differently in the context.

Also, in the disclosure, expressions such as "have," "may have," "include," and "may include" denote the existence of such characteristics (e.g.: elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in the disclosure may describe various elements regardless of any order and/or degree of importance. Also, such expressions are used only to distinguish one element from another element, and are not intended to limit the elements.

Meanwhile, various elements and areas in drawings were illustrated schematically. Accordingly, the technical idea of the disclosure is not limited by the relative sizes or intervals illustrated in the accompanying drawings.

Hereinafter, the embodiments according to the disclosure will be described in detail with reference to the accompanying drawings, such that those having ordinary skill in the art to which the disclosure belongs can easily carry out the disclosure.

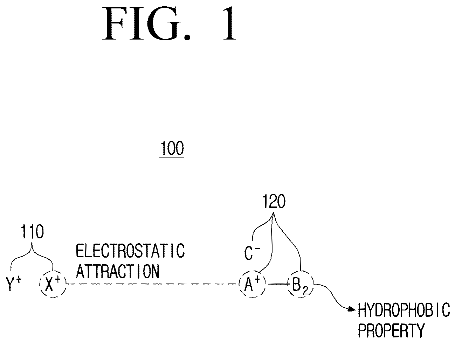

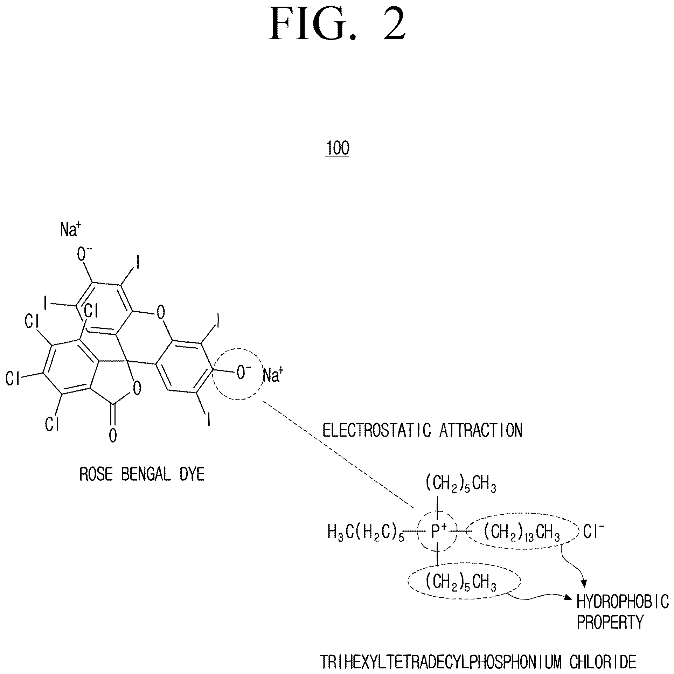

FIG. 1 is a diagram schematically illustrating a configuration of a composition 100 according to an example embodiment, and FIG. 2 is a diagram illustrating in detail the configuration of the composition 100 according to an example embodiment.

The composition according to an example embodiment can perform sterilization and/or virucidal functions. The term "composition" may be replaced with terms such as a complex or a mixture, etc., and there is no special limitation on germs or viruses that become the subjects of sterilization and/or virucidation by the composition 100.

The composition 100 may include at least one organic dye 110 and at least one ionic liquid 120. The X anion and the Y cation in FIG. 1 respectively illustrate an anion and a cation constituting or of the organic dye 110, and the AB₂ cation and the C anion in FIG. 1 respectively illustrate a cation and an anion constituting or of the ionic liquid 120. FIG. 2 exemplifies a case wherein the composition 100 according to an example embodiment may include rose Bengal which is the organic dye 110 and trihexyltetradecylphosphonium chloride which is the ionic liquid 120, for illustrating the configuration of the example composition.

The organic dye 110 according to an example embodiment may refer to an organic dye 110 that can react with a visible light and perform sterilization and/or virucidal functions. The organic dye 110 may react with a visible light and generate at least singlet oxygen (e.g., ¹O₂). For example, the organic dye 110 may receive a visible light and absorb energy, and accordingly, triplet state energy of the dye may be transmitted to ambient oxygen molecules and generate singlet oxygen. Further, as the generated singlet oxygen has strong oxidizing power, it can perform sterilization and/or virucidal functions.

Meanwhile, the organic dye 110 may be discolored as the singlet oxygen (e.g., dioxygen, dioxidene, O₂, and/or O=O) reacts with germs or viruses. The organic dye 110 may be discolored while it performs the sterilization and/or virucidal functions and lose its original color, and through this, it may indicate that the sterilization and/or virucidal functions were performed.

For example, the organic dye 110 may include at least one of methylene blue, rose Bengal and phthalocyanine, krysene, or yeosin. That is, the organic dye 110 according to an example embodiment may be selected as one of the various organic dyes 110 as in the aforementioned examples, and it may also consist of a combination of two or more of the organic dyes 110 in the aforementioned examples. Other elements may also be present in the organic dye 110.

The ionic liquid 120 according to an example embodiment may include an ion expressing a hydrophobic property, and may have an opposite electric charge to an electric charge included by the organic dye 110 in an ionized state. That is, the ionic liquid 120 according to an example embodiment is characterized by having a hydrophobic property, and/or having an opposite electric charge to an electric charge included by the organic dye 110 in an ionized state secondly. Each of the two characteristics will be described in detail below. Other elements may also be present in the ionic liquid 120.

First, one ion among the ions included in the ionic liquid 120 according to an example embodiment may have a hydrophobic property (it will be referred to briefly as 'a hydrophobic ion' hereinafter). Here, it is preferable that the hydrophobic property is sufficient to the extent that the property of the entire composition 100 including the organic dye 110 and the ionic liquid 120 expresses a hydrophobic property. The hydrophobic ion may include a functional group that can offset the polarity that a central atom of the ion has. For example, non-polar functional groups such as alkane and ether, etc. may be described as functional groups that can contribute to the hydrophobic property of the composition 100.

For example, the hydrophobic ion may include a central atom having an opposite electric charge to an electric charge included by the organic dye 110 in an ionized state, and at least one alkyl group. Here, the central atom may be at least one of nitrogen, phosphate, boron, oxygen, or sulfur, and the at least one alkyl group may include at least three carbon atoms. For example, the hydrophobic ion may include four or more alkyl groups, and the at least one alkyl group may include at least six carbon atoms.

It may be preferable that the hydrophobic ion does not include a functional group expressing a hydrophilic property in an example embodiment. Here, a functional group expressing a hydrophilic property refers to, for example, a polar functional group such as amide, carbonyl, alcohol, etc.

In the above, a condition wherein an ion included in the ionic liquid 120 according to an example embodiment gets to have a hydrophobic property was described in detail, but a condition wherein an ion included in the ionic liquid 120 gets to have a hydrophobic property can be diverse depending on the types of the organic dye 110 and the ionic liquid 120.

Secondly, the hydrophobic ion included in the ionic liquid 120 can have an opposite electric charge to an electric charge included by the organic dye 110 in an ionized state. That is, as illustrated in FIG. 1 and FIG. 2, the hydrophobic ion can be selected as an ion that has an opposite electric charge to an electric charge included by the organic dye 110 in an ionized state such that an electrostatic attraction can be generated between the ionic liquid 120 and the organic dye 110.

For example, in case the electric charge included by at least one atom among the central atoms of the organic dye 110 while the organic dye 110 is in an ionized state is a positive charge, the ionic liquid 120 may include an ion that expresses a hydrophobic property and has a negative charge. In contrast, in case the electric charge included by at least one atom among the central atoms of the organic dye 110 while the organic dye 110 is in an ionized state is a negative charge, the ionic liquid 120 may include an ion that expresses a hydrophobic property and has a positive charge. Meanwhile, in case at least one atom among the central atoms of the organic dye 110 carries both a positive charge and a negative charge while the organic dye 110 is in an ionized state, the ionic liquid 120 may express a hydrophobic property and have a negative charge or a positive charge.

For example, in case the organic dye 110 carries a positive charge in an ionized state such as rose Bengal or phthalocyanine, etc., the hydrophobic ion included in the ionic liquid 120 may include at least one of phosphonium, ammonium, imidazolium, or pyrrolidinium.

As another example, in case the organic dye 110 carries a negative charge in an ionized state such as methylene blue, etc., the hydrophobic ion included in the ionic liquid 120 may include at least one of tetrafluoroborate, bis(trifluoromethanesulfonyl)imide, or hexafluorophosphate.

In an example embodiment, if the organic dye 110 includes a hydrophobic ion having an opposite electric charge to an electric charge included by the organic dye 110 in an ionized state, the ionic liquid 120 according to an example embodiment may consist of a combination of two or more ionic liquids 120 according to the example as described above.

As described through the various embodiments above, the composition 100 according to an example embodiment performs sterilization and/or virucidal functions, and is not easily eluted by moisture, etc., and thus the composition 100 can resolve the problems that a subject product is contaminated by the organic dye 110 or the user suffers damage, while maintaining the sterilization and/or virucidal functions.

Also, when the sterilization and/or virucidal functions are performed by the composition 100 according to an example embodiment, the lifespan of the sterilization and/or virucidal functions can be expressed visually through a color change of the surface of a subject product to which the composition 100 is applied, and accordingly, credibility for the technology can be improved noticeably by visualizing that the sterilization and/or virucidal functions are actually operating.

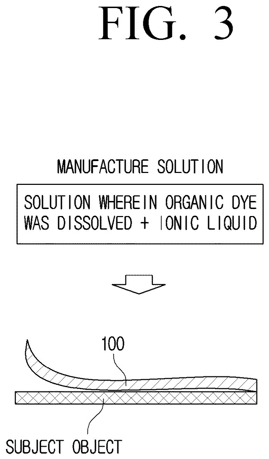

FIG. 3 is a diagram for illustrating an example method of manufacturing the composition 100 as a solution according to an example embodiment.

The composition 100 according to an example embodiment may be manufactured in a form of a solution by a simple combination of the organic dye 110 and the ionic liquid 120.

In the manufacturing process of the solution, an auxiliary solvent for facilitating ionization of the organic dye 110 and adjusting viscosity of the solution may be used. Specifically, the composition 100 according to an example embodiment may further include at least one auxiliary solvent from among water and ethanol. Here, the mass of the auxiliary solvent may be 0 to 500 times of the mass of the organic dye 110.

Meanwhile, it is preferable that the molar ratio of the organic dye 110 and the ionic liquid 120 included in the composition 100 is determined in consideration of the fact that the sterilization and/or virucidal effects may be reduced if the ratio of the organic dye 110 is too low, and on the other hand, the organic dye 110 may be eluted in the subject substance if the ratio of the organic dye 110 is too high.

For example, the molar number of the organic dye 110 included in the composition 100 may be 1 to 10 times or lower of the molar number of the ionic liquid 120. More specifically, the molar number of the organic dye 110 may be 2 to 5 times or lower of the molar number of the ionic liquid 120.

As illustrated in FIG. 3, if the solution wherein the organic dye 110 was dissolved in the auxiliary solvent is mixed and stirred with the ionic liquid 120, the composition 100 manufactured as a result may exist as a solution at room temperature. Also, if the composition 100 according to an example embodiment is manufactured as a solution, the manufactured solution is formed on the surface of the subject object, and may thereby perform the sterilization and/or virucidal functions. That is, if the composition 100 according to an example embodiment is manufactured as a solution, it may be easy to use the composition 100 for use in coating it directly on a desired material.

For example, the composition 100 according to an example embodiment may be coated on the surface of an object that contacts human skin often, such as a cell phone case, a TV, a remote control of a home appliance, an escalator handrail, an elevator button, etc. Other than the above, the composition 100 may be implemented in a form of an adhesive film that can be attached to/detached from an air purifier filter, a cleaner filter, and a needed surface. Other than the above, there is no special limitation on the types of products to which the composition 100 according to an example embodiment can be applied.

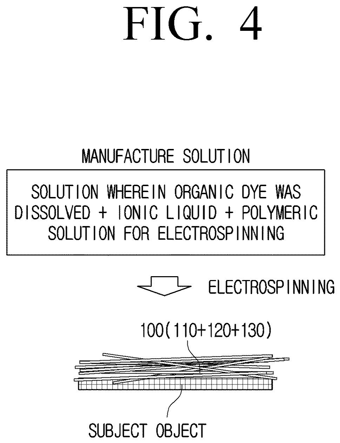

FIG. 4 is a diagram for illustrating a method of manufacturing the composition 100 according to an example embodiment as nano fiber.

The composition 100 according to an example embodiment may be manufactured in a form of nano fiber as the organic dye 110 and the ionic liquid 120 are combined with a polymeric liquid. That is, the composition 100 according to an example embodiment may further include a polymeric material 130 as well as the organic dye 110 and the ionic liquid 120, and the composition 100 may be formed in a form of fiber wherein the organic dye 110, the ionic liquid 120, and the polymeric material 130 are combined.

For example, the polymeric material 130 may include at least one of cellulose acetate or polyacrylonitrile. However, the disclosure is obviously not limited thereto.

As illustrated in FIG. 4, the composition 100 may be formed in a form of nano fiber as the organic dye 110, the ionic liquid 120, and the polymeric material 130 are combined, and then electrospinning is performed.

Electrospinning is a method of applying an electric field between an electrode and a polymeric solution, and manufacturing fiber as a solution flows from the electrode. Here, a tensile force is applied between the electrode and the solution, and the solution breaks out and fiber is generated, and the diameter of this fiber may be determined by the distance between the electrode and the solution, the flowing speed of the solution, the surface tension of the solution, etc.

Meanwhile, it is preferable that the mass of the organic dye 110 is determined in consideration of the fact that the sterilization and/or virucidal effects may be reduced if the ratio of the organic dye 110 is too low, and on the other hand, the organic dye 110 that does not stick to the polymeric fiber may remain if the ratio of the organic dye 110 is too high.

For example, the mass of the organic dye 110 may be 0.1wt% to 20wt% of the mass of the polymeric material 130. More specifically, the mass of the organic dye 110 may be 1.0wt% to 3.0wt% of the mass of the polymeric material 130.

As described above, if the composition 100 according to an example embodiment is manufactured as nano fiber, the organic dye 110 and the ionic liquid 120 may be formed evenly on the polymeric material 130, and accordingly, it may be easy to process the composition 100 as an internal filter of an air purifier, a disposable mask, a smart mask, etc. Meanwhile, it is obvious that the composition 100 according to an example embodiment can be manufactured in various forms according to the types of subject products such as a chip form and a film form, etc. as well as fiber forms including nano fiber.

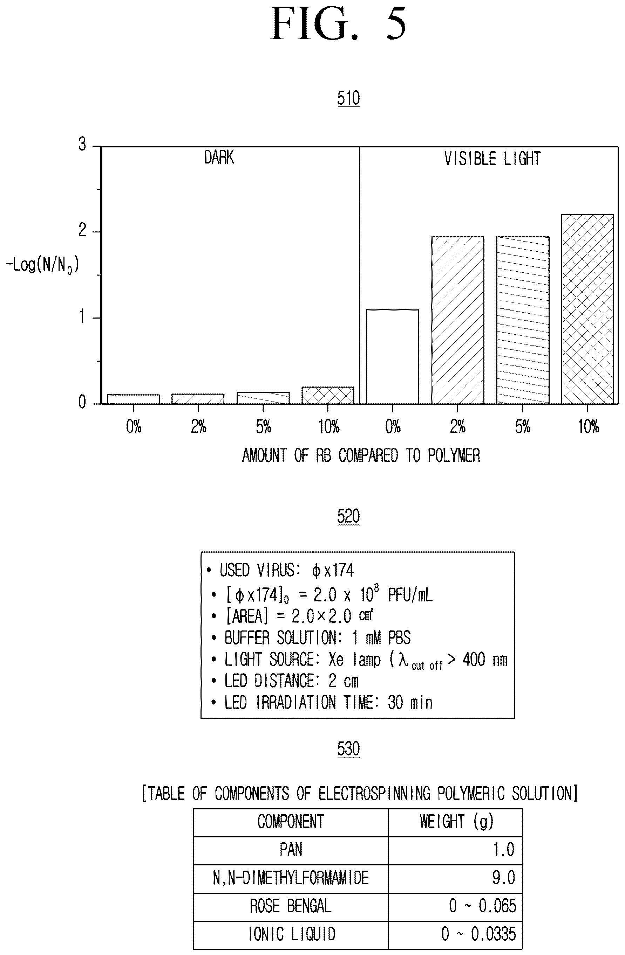

FIG. 5 is a diagram illustrating an experimental example for explaining an effect of inactivating a virus by the composition 100 according to an example embodiment.

In the experimental example of FIG. 5, rose Bengal (referred to briefly as RB hereinafter) was used as the organic dye 110, and trihexyltetradecylphosphonium chloride (referred to briefly as IL which is an acronym of ionic liquid hereinafter) was used as the ionic liquid 120. Also, polyacrylonitrile (referred to briefly as PAN hereinafter) was used as the polymeric material 130, and N,N-dimethylformamide (referred to briefly as DMF hereinafter) was used as the auxiliary solvent.

As described in the table 530 in FIG. 5, the masses of each component of the composition 100 according to the experimental example of FIG. 5 are PAN 1.0g, DMF 9.0g, RB 0 ~ 0.065g, IL 0 ~ 0.0335g. Also, the ratio of RB and IL was selected in comparison with the polymeric material 130. In addition, when RB and IL were combined, they were combined at a molar ratio of 1:1.

As described in the box 520 in FIG. 5, the used virus is ϕx174, and the concentration of the virus is 2.0 x 10⁸ PFU/mL, and the area is 2.0X2.0 cm², and 1 mM of phosphate-buffered saline (PBS) was used as a buffer solution. Also, as the light source, an Xe lamp using a visible light area filter was used, and the LED distance and irradiation time are 2 cm and 30 min, respectively.

After manufacturing the nano fiber according to an example embodiment according to the aforementioned experimental conditions, a virus inactivation experiment was performed by irradiating a visible light to the manufactured nano fiber. As illustrated in the graph 510 in FIG. 5, the nano fiber manufactured according to an example embodiment exhibited a noticeably improved virus inactivating performance in a case wherein a visible light was irradiated compared to a dark condition, and in particular, the nano fiber exhibited higher virus inactivating performance, i.e., virucidal performance as the amount of RB compared to the polymeric material 130 increased. Such an effect would be exerted to be the same for germs as well as viruses.

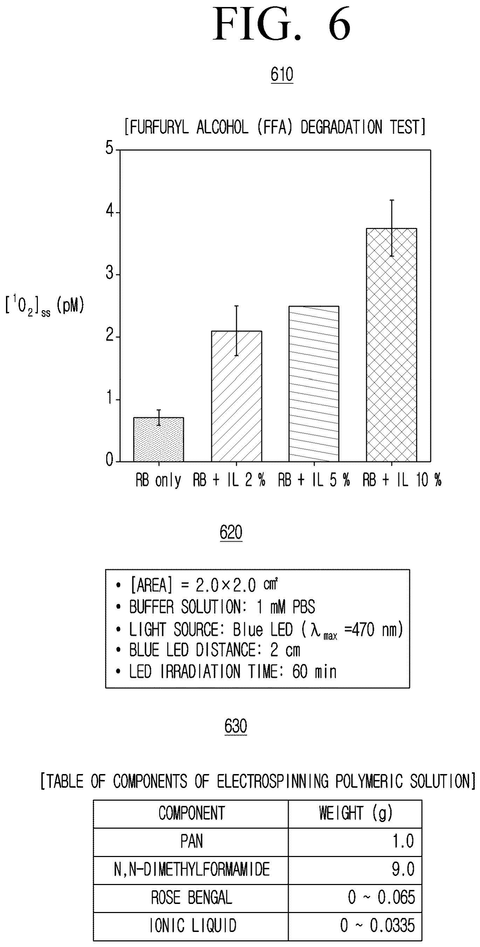

FIG. 6 is a diagram illustrating an experimental example for confirming generation of singlet oxygen by the composition 100 according to an example embodiment.

In the experimental example of FIG. 6, nano fiber was manufactured according to the ratio of the materials and the components (630 in FIG. 6) as in FIG. 5, and the generated amount of singlet oxygen for each amount of RB was confirmed by confirming the degree of decomposition of furfuryl alcohol (referred to briefly as FFA hereinafter) that selectively reacts with singlet oxygen.

As described in the box 620 in FIG. 6, the area was 2.0 X 2.0 cm², and 1 mM of PBS was used as a buffer solution. Also, as the light source, a blue LED having a maximum wavelength of 470nm was used, and the LED distance and irradiation time are 2 cm and 60 min, respectively.

As illustrated in the graph 610 in FIG. 6, in the nano fiber manufactured according to an example embodiment, singlet oxygen in an amount of two times or higher was generated when IL was combined with RB, compared to a case wherein only RB was used. Also, a more amount of singlet oxygen was generated as the ratio of IL combined with RB was increased by 2%, 5%, and 10%.

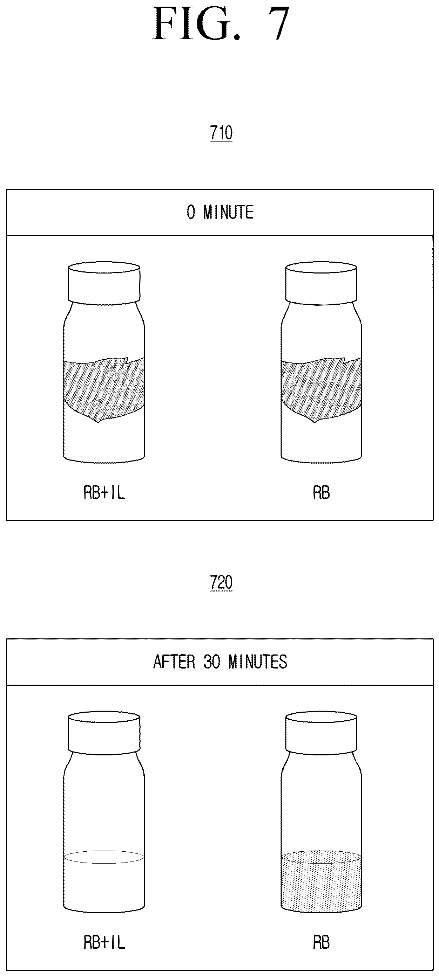

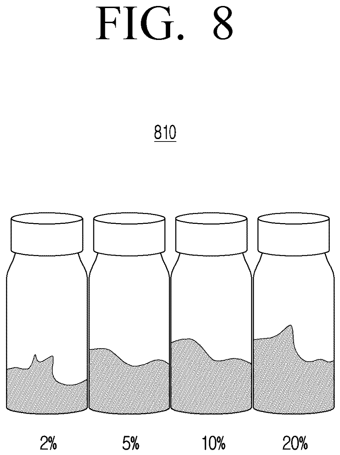

FIG. 7 and FIG. 8 are diagrams illustrating experimental examples for explaining an effect that the composition 100 according to an example embodiment is not eluted in water.

The first box 710 in FIG. 7 indicates a state wherein nano fiber manufactured by combining RB and IL according to an example embodiment is soaked in water, and a state wherein nano fiber manufactured by using RB without combining IL is soaked in water.

As illustrated in the second box 720 in FIG. 7, when the nano fiber is taken out of the water after 30 minutes passed in the state of the first box 710 in FIG. 7, the organic dye 110 was not eluted in the water of the container containing the nano fiber manufactured by combining RB and IL, but in contrast, the organic dye 110 was eluted in the water of the container containing the nano fiber manufactured by using RB without combining IL.

Meanwhile, as illustrated in the drawing 810 in FIG. 8, as a result of performing the experiment according to FIG. 7 by manufacturing a sample of which width and height are 2 cm while increasing the ratio of RB compared to the mass of the polymeric material 130 by 2%, 5%, 10%, and 20% respectively, the organic dye 110 was not eluted in water even if the amount of RB was increased to 20%.

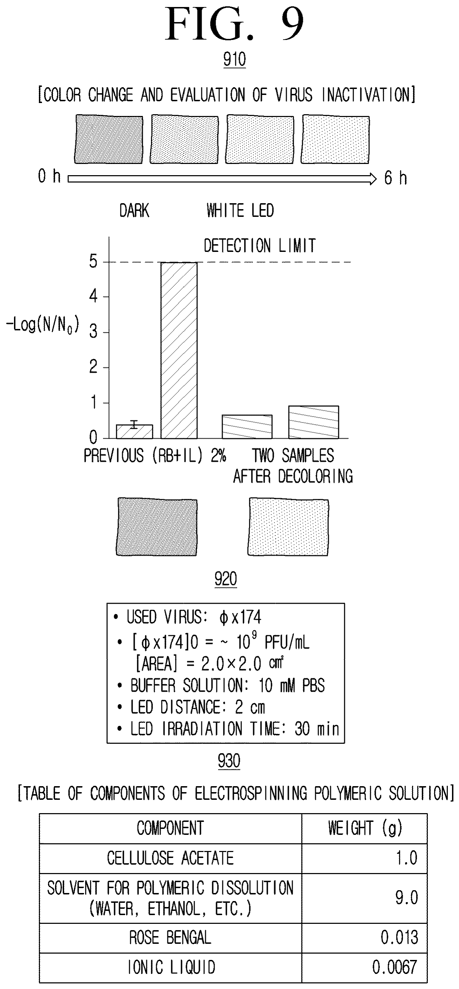

FIG. 9 is a diagram illustrating an experimental example for explaining a color change in case the composition 100 according to an example embodiment performs virus inac tivation.

In the experimental example of FIG. 9, the same materials as in the experimental example of FIG. 5 were used as the organic dye 110 and the ionic liquid 120, and cellulose acetate (referred to briefly as CA hereinafter) instead of PAN was used as the polymeric material 130, and water was used as an auxiliary solvent. However, no substantial difference would be generated in the experimental result even in the case of using ethanol, DMF, etc. as the auxiliary solvent instead of water.

As described in the table 930 in FIG. 9, the masses of each component are CA 1.0g, DMF 9.0g, RB 0.013g, IL 0.0067g. In the experiment in FIG. 9, the ratio of RB and IL was selected in comparison with the polymeric material 130. Meanwhile, when RB and IL were combined, they were combined at a molar ratio of 1:1, and the amount of RB and IL was selected as 2% compared to the polymeric material 130.

As described in the box 920 in FIG. 9, the used virus is ϕ x174, and the concentration of the virus is 2.0 x 10⁹ PFU/mL, and the area is 2.0X2.0 cm², and 10 mM of PBS was used as a buffer solution. Also, the LED distance and irradiation time are 2 cm and 30 min, respectively.

Each embodiment herein may be used in combination with any other embodim ent(s) described herein.

After manufacturing the nano fiber according to an example embodiment according to the aforementioned experimental conditions, a virus inactivation experiment was performed by irradiating a visible light to the manufactured nano fiber. As illustrated in the drawing and the graph 910 in FIG. 9, the nano fiber according to an example embodiment was completely decolored after six hours passed, and after the decoloring, the virus inactivating performance was expressed as a noticeably low numerical value unlike before the decoloring in a visible light condition.

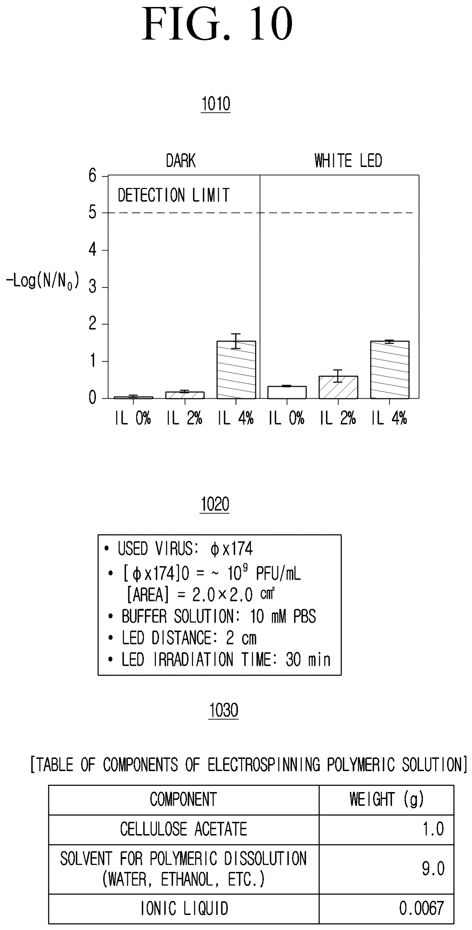

FIG. 10 is a diagram illustrating an experimental example for confirming that no change in performance occurs in a visible light condition in case the organic dye 110 is excluded in the composition 100 according to an example embodiment.

In the experimental example of FIG. 10, the same materials as in the experimental example of FIG. 9 were used, but unlike in the experimental example of FIG. 9, the organic dye 110 was excluded without combining it.

As described in the table 1030 in FIG. 10, the masses of each component are CA 1.0g, DMF 9.0g, IL 0.0067g. Also, the ratio of the solution wherein RB and IL were combined was selected in comparison with the polymeric material 130. In addition, when RB and IL were combined, they were combined at a molar ratio of 1:1, and the amount of RB and IL was selected as 2% compared to the polymeric material 130.

Meanwhile, as described in the box 1020 in FIG. 10, the used virus and the light condition proceeded as in the experiment in FIG. 9.

As illustrated in the graph 1010 in FIG. 10, in case the organic dye 110 was not included in the composition 100, there was no change in the virus inactivating performance in a visible light condition, and thus it could be confirmed that photosynthesis did not occur in case the organic dye 110 was not included in the composition 100.

As described through the various embodiments above, the composition 100 according to an example embodiment performs sterilization and/or virucidal functions, and is not easily eluted by moisture, etc., and thus the composition 100 can resolve the problems that a subject product is contaminated by the organic dye 110 or the user suffers damage, while maintaining the sterilization and/or virucidal functions. In certain example embodiments, the composition may comprise, consist, or consist essentially of the recited/described elements.

Also, while preferred embodiments have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure. While the disclosure has b een illustrated and described with reference to various embodiments, it will be understood that the various embodiments are intended to be illustrative, not limiting. It will further be underst ood by those skilled in the art that various changes in form and detail may be made without de parting from the true spirit and full scope of the disclosure, including the appended claims and their equivalents. It will also be understood that any of the embodiment(s) described herein m ay be used in conjunction with any other embodiment(s) described herein.

## Claims

1. A composition comprising:
an organic dye configured to react with visible light and generate singlet oxygen; and
an ionic liquid including an ion with a hydrophobic property,
wherein the ion has an opposite electric charge to an electric charge included in the organic dye in an ionized state.

2. The composition of claim 1,
wherein the ion comprises a central atom having the opposite electric charge and at least one alkyl group, and
the central atom is one of nitrogen, phosphate, boron, oxygen, or sulfur, and
the at least one alkyl group comprises at least three carbon atoms.

3. The composition of claim 1,
wherein the ion does not comprise a functional group with a hydrophilic property.

4. The composition of claim 1,
wherein the organic dye comprises at least one of: methylene blue, rose Bengal, or phthalocyanine.

5. The composition of claim 1,
wherein the ion is a cation, and comprises at least one of phosphonium, ammonium, imidazolium, or pyrrolidinium.

6. The composition of claim 1,
wherein the ion is an anion, and comprises at least one of tetrafluoroborate, bis(trifluoromethanesulfonyl)imide, or hexafluorophosphate.

7. The composition of claim 1,
wherein a molar number of the organic dye is from 1 to 10 times or lower of a molar number of the ionic liquid.

8. The composition of claim 7,
wherein the molar number of the organic dye is from 2 to 5 times or lower of the molar number of the ionic liquid.

9. The composition of claim 1, further comprising:
a polymeric material,
wherein the composition is formed in a form of fiber wherein the organic dye, the ionic liquid, and the polymeric material are combined.

10. The composition of claim 9,
wherein the composition is formed in a form of nano fiber as the organic dye, the ionic liquid, and the polymeric material are combined, and then electrospinning is performed.

11. The composition of claim 9,
wherein the polymeric material comprises at least one of cellulose acetate or polyacrylonitrile.

12. The composition of claim 9,
wherein a mass of the organic dye is from 0.1 wt.% to 20 wt.% of a mass of the polymeric material.

13. The composition of claim 12,
wherein the mass of the organic dye is from 1.0 wt.% to 3.0 wt.% of the mass of the polymeric material.

14. The composition of claim 1,
wherein the composition exists as a solution at room temperature, and
further comprises at least one auxiliary solvent from among water and ethanol.

15. The composition of claim 1,
wherein the organic dye is configured to be discolored as the singlet oxygen reacts with germ(s) or virus(es).
